# EUROPEAN PATENT SPECIFICATION

(11) **EP 1 377 862 B1**
(45) Date of publication and mention of the grant of the patent: **28.09.2005**
(21) Application number: 02706988.9
(22) Date of filing: 21.03.2002
(51) Int. Cl.: G02B 6/44

(54) **OPTICAL FIBRE ORGANISER**
VERTEILER FÜR OPTISCHE FASERN
PLATINE D'ASSEMBLAGE DE FIBRES OPTIQUES

(30) Priority: 02.04.2001 GB 0108255
(43) Date of publication of application: 07.01.2004
(73) Proprietor: Tyco Electronics Raychem NV, 3010 Kessel-Lo (BE)
(72) Inventor: VASTMANS, Kristof, B-3000 Leuven (BE); DEROOST, Dirk, B-3128 Baal-Tremelo (BE); LEEMAN, Sam, B-3000 Leuven (BE)
(74) Representative: Jay, Anthony William
(86) International application number: PCT/GB2002/001374
(87) International publication number: WO 2002/082152

(56) References cited:
- WO-A-00/48032
- WO-A-00/58769
- WO-A-95/07482
- US-A- 5 206 927
- US-A- 5 421 532
- US-A- 5 689 606

## Description

The present invention relates to an optical fibre organiser. More in particular, the present invention relates to an optical fibre organiser comprising trays in which optical fibres can be guided, spliced and/or stored.

Organisers of this kind are well known. They are used in, for example, optical fibre splice closures and optical fibre management cabinets. An individual tray may be dedicated to a single task, such as overlength storage, or may combine several tasks, such as splicing and overlength storage.

There is an increasing need for optical fibre organisers having a compact design yet providing optical fibre management with a high degree of organisation for relatively large numbers of optical fibres.

International Patent Application WO 00/58769 (Tyco Electronics Raychem) [B365] discloses a folding cassette, the upper and lower parts of which constitute optical fibre trays. Such an arrangement can be compact while providing a unit that can be easily handled. The location of the ports providing access to this known cassette is determined by its use in an optical fibre system.

WO 00/58769 describes a cassette for holding a plurality of optical fibres splitters. The cassette comprises first and second trays which are pivotally connected together so as to provide an open position in which access to the trays is facilitated and a close position in which one of the trays is covered by the other. The cassette provides a self-contained module for holding the splitters within the interior region of the cassette with lengths of optical fibres that are guided within the cassette between the splitters and connectors provided at connector ports provided in both of the trays.

WO 00/48032 describes an optical fibre organiser tray having fibre inlet, outlet and guide means on both sides of the tray. The organiser tray is of the type that is commonly used in fibre management systems where a plurality of such trays are pivotally connected one next to the other on a movable tray or drawer of a storage cabinet or to a support plate of an enclosure.

It is an object of the present invention to provide an optical fibre organiser which has an even greater fibre handling capacity without requiring a large number of parts.

It is another object of the present invention to provide an optical fibre organiser which offers a greater flexibility with respect to the position and number of access ports.

It is a further object of the present invention to provide an optical fibre organiser which is versatile yet economical.

In accordance with the present invention, these and other objects are met by an organiser for optical fibres, comprising a base tray and a main tray, said trays being hingedly connected so as to provide an opened position in which access to the trays is facilitated and a closed position in which the base tray is at least partially covered by the main tray, the base tray comprising at least one port for passing optical fibres into and out of the organiser and guide means for guiding optical fibres within the tray, the main tray having a first side facing away from the base tray and a second side facing towards the base tray, both the first side and the second side having guide means for guiding optical fibres.

By providing a base tray in which the at least one access port of the organiser is located, the number and/or position of the access port or ports can be modified by only changing the design of the base tray. It is therefore possible to form an organiser out of a "universal" main tray and base tray specifically selected or designed for the particular application. In this way, a large degree of flexibility is obtained.

By providing a main tray both sides of which have guide means for guiding optical fibres a very large fibre handling capacity is obtained. In such a double-sided tray one side may for example be used for fibre overlength storage, while the other side may be used for splicing. Of course it is also possible to use both sides for overlength storage and/or splicing. However, by dedicating each side to a single task a high degree of organisation is obtained.

The above-mentioned guide means for guiding optical fibres may be constituted by grooves and/or upstanding ridges which are either straight or have a radius of curvature which is equal to or larger than the minimum bend radius of the optical fibres.

Although the main tray may be provided with ports which provide access to the organiser as a whole it is preferred that such ports are only located on the base tray. It is then possible for the base tray to merely receive and guide incoming fibres and pass and guide outgoing fibres, while the actual fibre management tasks of e.g. splicing and storing may be assigned to the main tray. The base tray may comprise means for facilitating the receiving of incoming fibres, such as cable termination means (e.g. cable clamps, strength member clamps, break-out devices).

As stated above, fibres received in the base tray are passed to the main tray and eventually back to the base tray. To facilitate fibre management and to protect the fibres, the organiser is preferably provided with at least one fibre guide for guiding optical fibres from the base tray towards the main tray, and preferably vice versa. Advantageously, the at least one fibre guide is located on the base tray, thus freeing the surface of the main tray for the core tasks of splicing, storing etc..

In a preferred embodiment the at least one fibre guide is designed so as to guide fibres away from a main surface of the base tray to a main surface of the main tray. As the main surface of the main tray is spaced apart from the main surface of the base tray so as to provide space for the fibres and for components of the organiser, this guiding away implies a three-dimensional design of the fibre guides.

Advantageously, at least two fibre guides extend to the first and the second side of the main tray respectively. That is, the fibre guides may extend different distances from a main surface of the base tray. It will be understood that the appropriate distances are determined by the relative positions of the trays when the organiser is in its closed position. However, the fibre guides preferably end near the hinging means connecting the trays so as to minimise the influence of the hinging on the fibres.

Preferably, at least one said fibre guide extends from within the base tray. It will be understood that a tray is normally provided with upstanding peripheral walls and that the at least one fibre guide extends from within the area defined by those walls. It is, however, also possible that at least one said fibre guide extends from outside the base tray. In such an embodiment the entrance to this "external" fibre guide constitutes an additional port to the organiser.

In a preferred embodiment the main tray is provided with a through port providing a passage between the first and the second side. In this way fibres can easily be guided from e.g. the storage side of the main tray to e.g. the splicing side without having to lead the fibres via the base tray.

Preferably, the through port is open to one side of the tray so as to provide side-entry. This allows uncut fibres to be passed through the through port.

To assist the fibres being guided between the trays, especially when the organiser is hinged open, it is preferred that the main tray is provided with at least one fibre guiding tongue extending substantially in the plane of the main tray beyond the hinging axis. Advantageously, the guiding tongue is located near one end of at least one fibre guide.

In a preferred embodiment one surface of the main tray is provided with retaining means for retaining optical fibre splices, said surface preferably being the second surface. In that embodiment, the first side is preferably used for overlength storage. To provide storage facilities at least one surface of the main tray is preferably provided with an island around which optical fibres can be wound, the island having a radius of curvature at least equal to the minimum bend radius of the optical fibre. Said island may be constituted by upstanding walls or by a raised section of the tray. To allow fibres to be looped, the island may be intersected by an X-shaped arrangement of grooves.

To be able to easily take the organiser apart so as to exchange e.g. the base tray, the organiser of the present invention is preferably provided with releasable hinging means.

An organiser of this kind may have gaps in its surfaces. Some of those gaps may serve a fibre management purpose, such as the through port between the sides of the main tray. Other gaps may be present for technical reasons, e.g. to facilitate moulding the trays. In both instances, an interruption of a fibre guiding surface may form an obstacle when feeding fibres through the organiser, the fibres possible continuing on the wrong side of the surface beyond the gap. According to a further aspect of the present invention at least one gap in a tray surface is preceded, in the feeding direction of the optical fibres, by a ramp. Such a ramp may be formed by a hump or protrusion located near the edge of the gap. The length, the shape and the height of the ramp are chosen so as not to compromise the minimum bend radius of the optical fibres.

The present invention further provides a kit-of-parts for forming an organiser as defined above.

The present invention will be described in more detail below with reference to exemplary embodiments illustrated in the accompanied drawings, in which:
Figure 1 shows, in perspective, a first embodiment of the organiser according to the present invention in an open position;
Figure 2 shows, in perspective, the organiser of Fig. 1 in a closed position;
Figure 3 shows, in perspective, a second embodiment of the organiser according to the present invention in an open position;
Figure 4 shows, in perspective, the organiser of Fig. 3 in a closed position; and
Figure 5 shows, in side view, part of the organiser of Fig. 1.

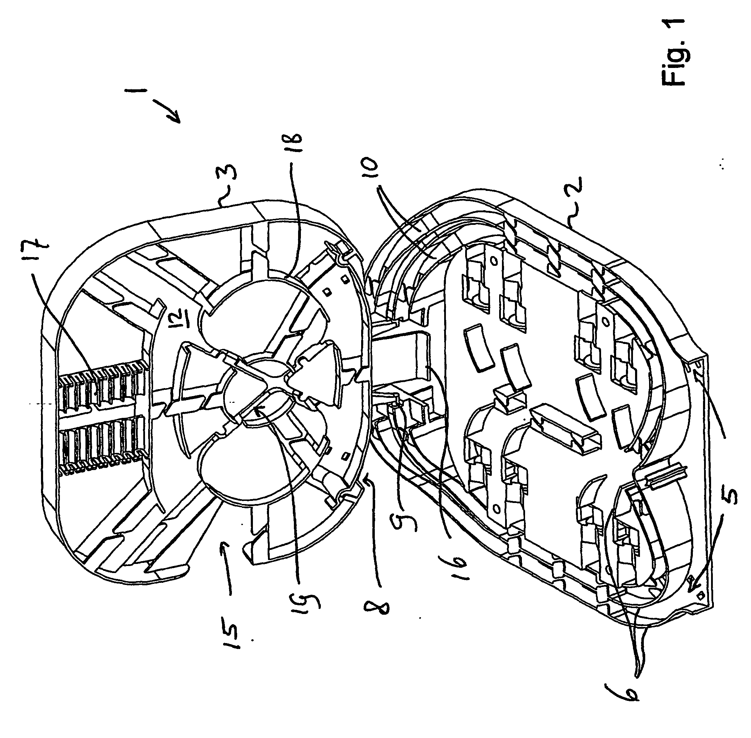

The organiser 1 shown merely by way of non-limiting example in Fig. 1 comprises a base tray 2 and a main tray 3. Both trays are provided with upstanding walls 6 for optical fibres. The trays are hingedly connected by means of releasable hinges 9. The organiser 1 is provided with access ports 5 constituted by openings in the side walls of the base tray 2. Further access ports may be provided on the opposite (lower) face of the base tray 2 (not shown).

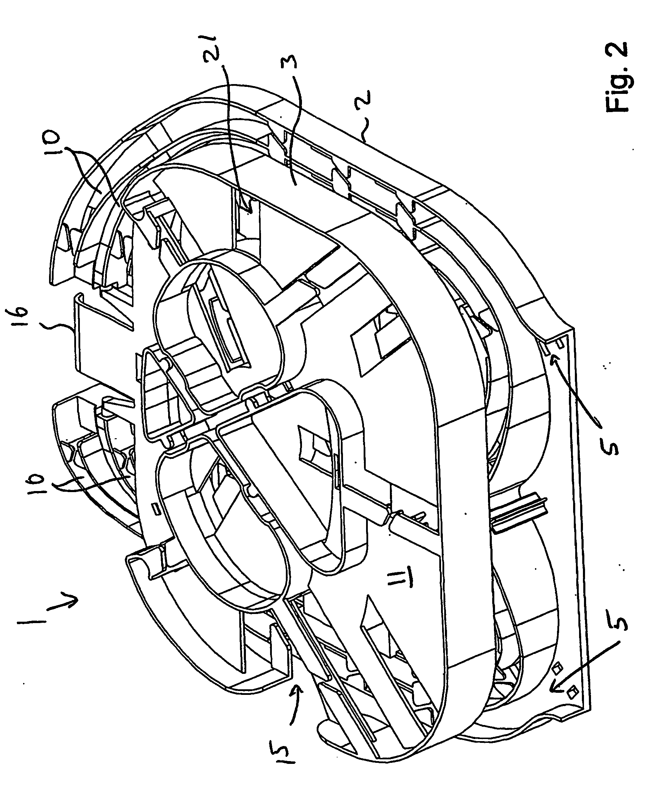

Fibre guides 10 are provided to guide optical fibres from the base tray 2 towards the main tray 3. As can be seen in Fig. 1, the fibres guides 10 are constituted by upstanding walls 6 and sections of the surface of the base tray 2. As the surface of the main tray 3 is spaced apart from that of the base tray 2, also in the closed position of the organiser shown in Fig. 2, the fibre guides slope upwards, away from the surface of the base tray 2 so as to define a smooth trajectory for the optical fibres. A tongue 16 protruding from the main tray 3 beyond the hinging axis (at 9) serves to further guide the fibres towards ports 8 of the main tray. It should be noted that the ports 8 are internal to the organiser, in contrast to the access ports 5.

The (second) surface 12 of the main tray 3 is provided with optical fibre splice holders 17 in which optical fibre splices can be accommodated, and an island 18 around which overlength fibre can be wound. This enables the side 12 of the main tray 3 to be used both for splicing and for overlength storage. The X-shaped grooves 19 in the island 18 serve to accommodate a loop in the fibre. A through port 15, which is open to one edge of the main tray 3, serves to pass fibres from the (second) side 12 shown in Fig. 1 to the (first) shown in Fig. 2. The through port 15 shown allows side-entry of optical fibres, thus making it possible to accommodate uncut fibres.

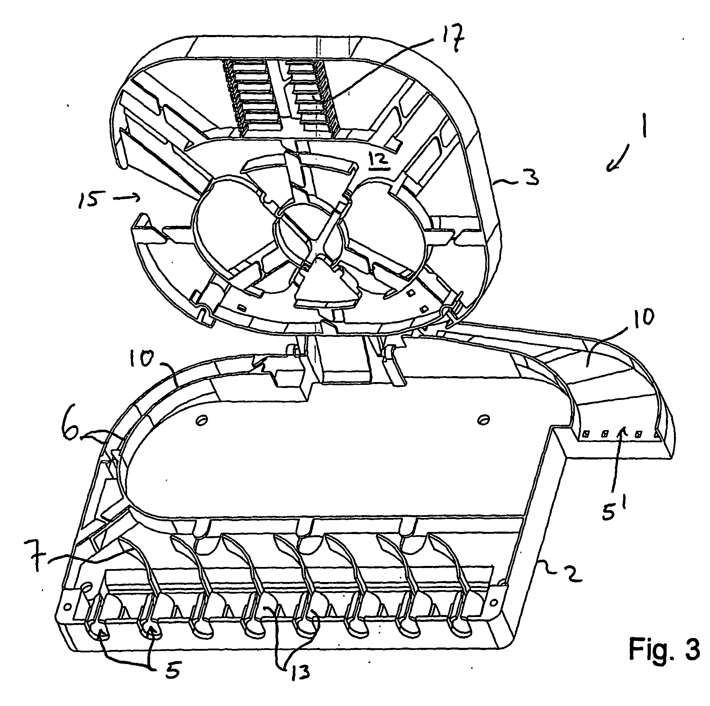

The ports 5 shown in Fig. 1 substantially face in two opposite directions, allowing to receive fibres from and pass fibres into those directions. In the alternative embodiment shown in Fig. 3 eight forward facing ports 5 are provided along one side of the base tray 2, while an additional port 5' is provided to the side of the base tray. The regular ports 5 are provided with cable termination devices 13 which preferably are the cable termination devices disclosed in British patent application 0106231.4 (Tyco Electronics Raychem). Bend control means 7 are positioned behind these ports 5.

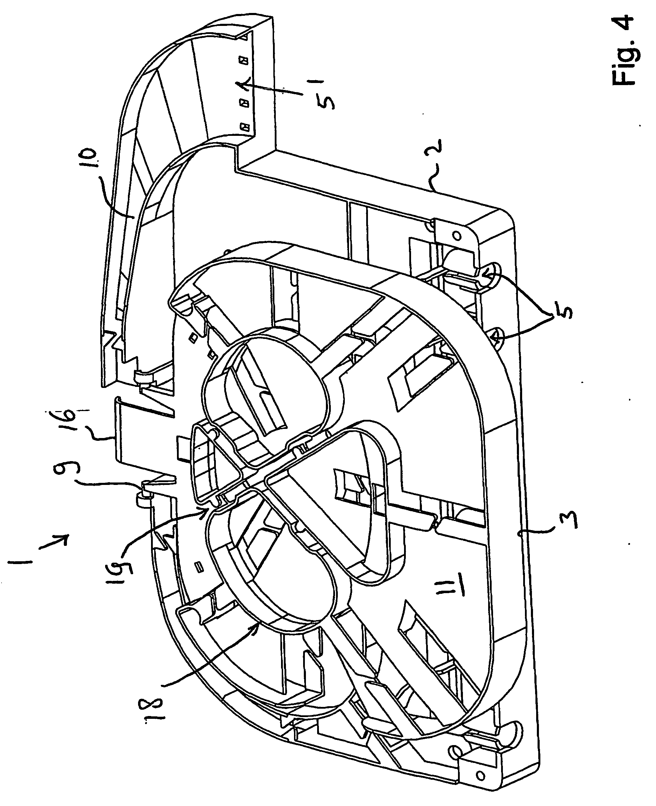

The additional port 5' leads directly to a fibre guide 10 and "by-passes" the main area of the base tray 2. This embodiment is particularly suitable for receiving optical fibre cables via the additional port 5', leading them directly to the main tray 3. In the main tray 3 they are spliced to so-called drop cables which are then fed, through the base tray 2 towards the regular ports 5. The upper or first surface 11 of the base tray 3, shown in Fig. 4, serves for overlength storage. Due to the X-shaped pattern 19 it is possible to accommodate loops of uncut fibre cables.

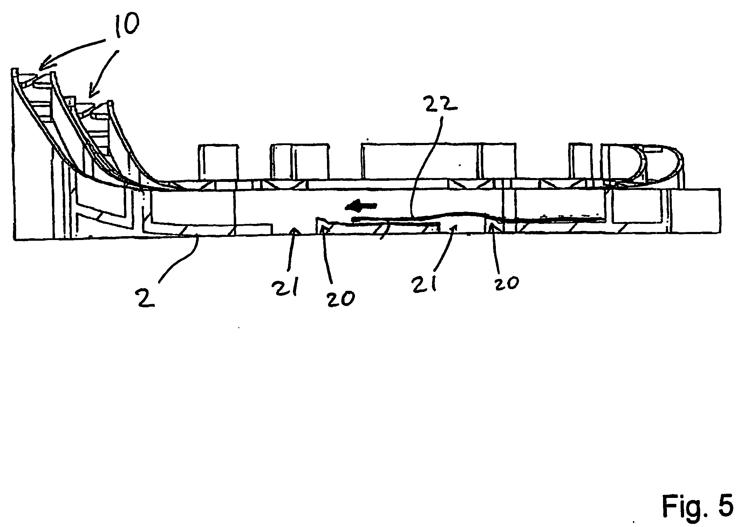

The base tray 2 of Fig. 1 is shown in side view and partial cross-section in Fig. 5. As clearly shown in Fig. 5, the fibres guides 10 rise up from the base tray 2 and reach different levels corresponding to the plain of the first side 11 and the second side 12 of the main tray 3 respectively.

Gaps 21 in the base tray 2 are provided with small ramps 20 which serve to direct a fibre fed through the guides. These ramps 20 prevent fibres 22 from entering the gap and diverging from their intended course. This clearly facilitates the feeding of fibres through the organiser. As shown in Fig. 5, the ramps 20 may be located on one edge of a gap only to facilitate feeding fibres in one particular direction (indicated by an arrow). It is, however, also possible to provide ramps on both sides of a gap.

The presence of the ramps 20 is of course not limited to the fibre guides 10 or to the base tray 2 but may also be used in the main tray 3, in particular near the through port 15.

It will therefore be understood by those skilled in the art that the present invention is not limited to the embodiments shown and that many additions and modifications are possible without departing from the scope of the present invention as defined in the appending claims.

## Claims

1. Organiser (1) for optical fibres, comprising a base tray (2) and a main tray (3), said trays being hingedly connected so as to provide an opened position in which access to the trays is facilitated and a closed position in which the base tray (2) is at least partially covered by the main tray (3), the base tray (2) comprising at least one port (5) for passing optical fibres into and out of the organiser (1) and guide means (6) for guiding optical fibres within the tray, the main tray (3) having a first side (11) facing away from the base tray (2) and a second side (12) facing towards the base tray (2), the second side (12) having guide means (6) for guiding optical fibres, **characterised by** the first side having guide means for guiding optical fibres.

2. Organiser according to claim 1, wherein the base tray (2) is provided with at least one fibre guide (10) for guiding optical fibres from the base tray (2) towards the main tray (3).

3. Organiser according to claim 2, wherein at least two fibre guides (10) extend to the first (11) and the second (12) side of the main tray (3) respectively.

4. Organiser according to claim 2 or 3, wherein at least one said fibre guide (10) extends from within the base tray (2).

5. Organiser according to claim 2, 3 or 4, wherein at least one said fibre guide (10) extends from outside the base tray (2).

6. Organiser according to any of the preceding claims, wherein the main tray (3) is provided with a through port (15) providing a passage between the first (11) and the second (12) side.

7. Organiser according to claim 6, wherein the through port (15) is open to one side of the tray (3) so as to provide side-entry.

8. Organiser according to any of the preceding claims, wherein the main tray (3) is provided with at least one fibre guiding tongue (16) extending substantially in the plane of the main tray (3) beyond the hinging axis.

9. Organiser according to claim 8, wherein the guiding tongue (16) is located near one end of at least one fibre guide (10).

10. Organiser according to any of the preceding claims, wherein one side of the main tray (3) is provided with retaining means (17) for retaining optical fibre splices, said side preferably being the second side (12).

11. Organiser according to any of the preceding claims, wherein at least one side of the main tray (3) is provided with an island (18) around which optical fibres can be wound, the island having a radius of curvature at least equal to the minimum bend radius of the optical fibre.

12. Organiser according to claim 11, wherein the island (18) is intersected by an X-shaped arrangement of grooves (19).

13. Organiser according to any of the preceding claims, provided with releasable hinging means (9).

14. Organiser according to any of the preceding claims, wherein at least one port (5) is provided with bend control means (7) having a radius of curvature at least equal to the minimum bend radius of the optical fibre.

15. Organiser according to any of the preceding claims, wherein at least one gap in a tray surface is preceded, in the feeding direction of the optical fibres, by a ramp (20) to guide the fibres away from the gap in the tray surface.

16. Kit-of-parts for forming an organiser (1) according to any of the preceding claims.

## Patentansprüche

1. Verteiler (1) für optische Fasern, der ein Basisgehäuseteil (2) und ein Hauptgehäuseteil (3) umfasst, wobei die Gehäuseteile so aneinander angelenkt sind, dass eine geöffnete Position, in der der Zugang zu den Gehäuseteilen erleichtert wird, und eine geschlossene Position möglich sind, in der das Basisgehäuseteil (2) wenigstens teilweise vom Hauptgehäuseteil (3) bedeckt wird, wobei das Basisgehäuseteil (2) wenigstens eine Öffnung (5) zum Führen von optischen Fasern in den und aus dem Verteiler (1) sowie Leitmittel (6) zum Leiten von optischen Fasern innerhalb des Gehäuseteils umfasst, wobei das Hauptgehäuseteil (3) eine erste Seite (11), die vom Basisgehäuseteil (2) weg zeigt, und eine zweite Seite (12) aufweist, die zum Basisgehäuseteil (2) hin zeigt, wobei die zweite Seite (12) Leitmittel (6) zum Leiten von optischen Fasern hat, **dadurch gekennzeichnet, dass** die erste Seite Leitmittel zum Leiten von optischen Fasern hat.

2. Verteiler nach Anspruch 1, wobei das Basisgehäuseteil (2) mit wenigstens einer Faserführung (10) zum Leiten von optischen Fasern vom Basisgehäuseteil (2) zum Hauptgehäuseteil (3) hin versehen ist.

3. Verteiler nach Anspruch 2, wobei wenigstens zwei Faserführungen (10) jeweils zur ersten (11) und zur zweiten (12) Seite des Hauptgehäuseteils (3) verlaufen.

4. Verteiler nach Anspruch 2, wobei sich wenigstens eine genannte Faserführung (10) innerhalb des Basisgehäuseteils (2) beginnend erstreckt.

5. Verteiler nach Anspruch 2, 3 oder 4, wobei sich wenigstens eine genannte Faserführung (10) außerhalb des Basisgehäuseteils (2) beginnend erstreckt.

6. Verteiler nach einem der vorherigen Ansprüche, wobei das Hauptgehäuseteil (3) mit einer Durchgangsöffnung (15) versehen ist, die eine Passage zwischen der ersten (11) und der zweiten (12) Seite bildet.

7. Verteiler nach Anspruch 6, wobei die Durchgangsöffnung (15) nach einer Seite des Gehäuseteils (3) hin offen ist, um einen Seiteneingang zu bilden.

8. Verteiler nach einem der vorherigen Ansprüche, wobei das Hauptgehäuseteil (3) mit wenigstens einer Faserführungszunge (16) versehen ist, die im Wesentlichen in der Ebene des Hauptgehäuseteils (3) jenseits der Scharnierachse verläuft.

9. Verteiler nach Anspruch 8, wobei sich die Führungszunge (16) nahe an einem Ende von wenigstens einer Faserführung (10) befindet.

10. Verteiler nach einem der vorherigen Ansprüche, wobei eine Seite des Hauptgehäuseteils (3) mit Haltemitteln (17) zum Halten von Optofaserspleißungen versehen ist, wobei diese Seite vorzugsweise die zweite Seite (12) ist.

11. Verteiler nach einem der vorherigen Ansprüche, wobei wenigstens eine Seite des Hauptgehäuseteils (3) mit einer Insel (18) versehen ist, um die optische Fasern gewickelt werden können, wobei die Insel einen Krümmungsradius hat, der wenigstens gleich dem Mindestbiegeradius der optischen Faser ist.

12. Verteiler nach Anspruch 11, wobei die Insel (18) von einer X-förmigen Anordnung von Rillen (19) geschnitten wird.

13. Verteiler nach einem der vorherigen Ansprüche, der mit einem lösbaren Anlenkmittel (9) versehen ist.

14. Verteiler nach einem der vorherigen Ansprüche, wobei wenigstens eine Öffnung (5) mit Biegereguliermitteln (7) mit einem Krümmungsradius versehen ist, der wenigstens gleich dem Mindestbiegeradius der optischen Faser ist.

15. Verteiler nach einem der vorherigen Ansprüche, wobei sich vor wenigstens einem Spalt in einer Gehäuseteiloberfläche, in Zuführungsrichtung der optischen Fasern, eine Rampe (20) befindet, um die Fasern von dem Spalt in der Gehäuseteileoberfläche weg zu leiten.

16. Teilesatz zum Bilden eines Verteilers (1) nach einem der vorherigen Ansprüche.

## Revendications

1. Platine d'assemblage (1) pour fibres optiques, comprenant un plateau de base (2) et un plateau principal (3), lesdits plateaux étant connectés par articulation, de sorte à établir une position ouverte, dans laquelle l'accès aux plateaux est facilité, et une position fermée, dans laquelle le plateau de base (2) et au moins partiellement recouvert par le plateau principal (3), le plateau de base (2) comprenant au moins un orifice (5) pour faire passer les fibres optiques dans la platine d'assemblage (1) et hors de celle-ci, et un moyen de guidage (6) pour guider les fibres optiques dans le plateau, le plateau principal (3) comportant un premier côté (11) orienté à l'écart du plateau de base (2) et un deuxième côté (12) orienté vers le plateau de base (2), le deuxième côté (12) comportant un moyen de guidage (6) pour guider les fibres optiques, **caractérisée en ce que** le premier côté comporte un moyen de guidage pour guider les fibres optiques.

2. Platine d'assemblage selon la revendication 1, dans laquelle le plateau de base (2) comporte au moins un guide des fibres (10) pour guider les fibres optiques du plateau de base (2) vers le plateau principal (3).

3. Platine d'assemblage selon la revendication 1, dans laquelle au moins deux guides des fibres optiques (10) s'étendent respectivement vers le premier (11) et le deuxième (12) côté du plateau principal (3).

4. Platine d'assemblage selon les revendications 2 ou 3, dans laquelle au moins un dit guide des fibres (10) s'étend à partir de l'intérieur du plateau de base (2).

5. Platine d'assemblage selon les revendications 2, 3 ou 4, dans laquelle au moins un dit guide des fibres (10) s'étend à partir de l'extérieur du plateau de base (2).

6. Platine d'assemblage selon l'une quelconque des revendications précédentes, dans laquelle le plateau principal (3) comporte un orifice de passage (15) établissant un passage entre le premier (11) et le deuxième (12) côté.

7. Platine d'assemblage selon la revendication 6, dans laquelle l'orifice de passage (15) est ouvert vers un côté du plateau (3) de sorte à établir une entrée latérale.

8. Platine d'assemblage selon l'une quelconque des revendications précédentes, dans laquelle le plateau principal (3) comporte au moins une languette de guidage des fibres (16) s'étendant pratiquement dans le plan du plateau principal (3), au-delà de l'axe d'articulation.

9. Platine d'assemblage selon la revendication 8, dans laquelle la languette de guidage (16) est agencée près d'une extrémité du au moins un guide des fibres (10).

10. Platine d'assemblage selon l'une quelconque des revendications précédentes, dans laquelle un côté du plateau principal (3) comporte un moyen de retenue (17) pour retenir les épissures de fibres optiques, ledit côté étant de préférence constitué par le deuxième côté (12).

11. Platine d'assemblage selon l'une quelconque des revendications précédentes, dans laquelle au moins un côté du plateau principal (3) comporte un îlot (18), autour duquel les fibres optiques peuvent être enroulées, l'îlot ayant une rayon de courbure au moins égal au rayon de courbure minimal de la fibre optique.

12. Platine d'assemblage selon la revendication 11, dans laquelle l'îlot (18) est intersecté par un agencement de rainures en X (19).

13. Platine d'assemblage selon l'une quelconque des revendications précédentes, comportant un moyen d'articulation à dégagement (9).

14. Platine d'assemblage selon l'une quelconque des revendications précédentes, dans laquelle au moins un orifice (5) comporte un moyen de contrôle de la courbure (7), ayant un rayon de courbure au moins égal au rayon de courbure minimal de la fibre optique.

15. Platine d'assemblage selon l'une quelconque des revendications précédentes, dans laquelle au moins un espace dans une surface du plateau est précédé, dans la direction d'alimentation des fibres optiques, par une rampe (20) destinée à guider les fibres à l'écart de l'espace dans la surface du plateau.

16. Ensemble de pièces pour former une platine d'assemblage (1) selon l'une quelconque des revendications précédentes.
